(19) **Europäisches Patentamt**

**European Patent Office**

**Office européen des brevets**

(11) **EP 0 853 571 B1**

(12) **EUROPÄISCHE PATENTSCHRIFT**

(45) Veröffentlichungstag und Bekanntmachung des Hinweises auf die Patenterteilung:
**04.12.2002 Patentblatt 2002/49**

(21) Anmeldenummer: **96927696.3**

(22) Anmeldetag: **06.08.1996**

(51) Int Cl.⁷: **B60T 13/74**

(86) Internationale Anmeldenummer:
**PCT/EP96/03475**

(87) Internationale Veröffentlichungsnummer:
**WO 97/012793 (10.04.1997 Gazette 1997/16)**

(54) **STEUER- BZW. REGELSYSTEM FÜR EINE ELEKTROMOTORISCH BETÄTIGTE RADBREMSE**

CONTROL OR ADJUSTMENT SYSTEM FOR A WHEEL BRAKE OPERATED BY AN ELECTRIC MOTOR

SYSTEME DE COMMANDE OU DE REGULATION POUR UN FREIN SUR ROUE ACTIONNE PAR UN MOTEUR ELECTRIQUE

(84) Benannte Vertragsstaaten:
**DE FR GB**

(30) Priorität: **30.09.1995 DE 19536694**

(43) Veröffentlichungstag der Anmeldung:
**22.07.1998 Patentblatt 1998/30**

(73) Patentinhaber: **Continental Teves AG & Co. oHG 60488 Frankfurt (DE)**

(72) Erfinder:
• **BÖHM, Jürgen
  D-65558 Oberneisen (DE)**
• **BILL, Karlheinz
  D-63303 Dreieich (DE)**

(56) Entgegenhaltungen:
**DE-A- 3 444 301      GB-A- 2 156 021
US-A- 4 602 702      US-A- 4 804 073
US-A- 4 995 483**

## Beschreibung

Die Erfindung bezieht sich auf ein Steuer- bzw. Regelsystem für eine elektromotorisch betätigte Radbremse.

Ein solches System ist zum Beispiel in der US 4995483 beschrieben, hierbei handelt es sich um eine Bremse für ein Flugzeug.

Aufgrund des vom Führer des Flug- oder Fahrzeuges gewünschten Verzögerung wird eine Zuspannkraft für die Radbremse ermittelt. Ein Stellmotor wird solange betätigt bis ein bestimmter Stellweg des Betätigungsorgangs gemessen vom Erstkontakt des Bremsbelags an der Bremsscheibe erreicht ist.

Diese Maßnahme reicht nicht aus, das Fahrzeug feinfühlig abzubremsen. Zwar besteht im Prinzip ein bestimmter Zusammenhang zwischen dem Verschiebeweg des Verstellelements und der Zuspannkraft. Diese kann sich aber aufgrund von äußeren Einflüssen ändern, darüberhinaus ist das zu erzielende Bremsmoment nicht eindeutig mit der Zuspannkraft gekoppelt.

Beim Lösen der Bremse wird, nachdem festgestellt worden ist, daß der Bremsbelag sich von der Bremsscheibe gelöst hat, der Motor noch eine gewisse Zeit bestromt,so daß sich die Bremsbeläge von der Bremsscheibe lösen. Das sich dabei einstellende Lüftspiel ist nicht näher definiert, da das Lüftspiel nicht eindeutig mit der Bestromungszeit des Motors verknüpft ist.

Weiterhin ist aus DE-A-3 444 301 ein elektrisches Bremssystem bekannt bei dem die Bremsenstellung einer Bremsensollstellung entsprechend eingestellt wird.

Die Erfindung beruht daher auf der Aufgabe ein verbessertes System zur feinfühligen Bremsung und zum sicheren Einstellen eines genau definierten Lüftspiels zu erzielen.

Dazu wird vorgeschlagen, einen ersten Regelkreis vorzusehen, der den Istverschiebeweg des Betätigungselements an den Sollwert angleicht. Darüberhinaus wird in einem zweiten Regelkreis ein Wert, der die Bremswirkung charakterisiert, entsprechend einer Sollvorgabe abgeglichen.

Die Bremsbetätigung erfolgt nun über den zweiten Regelkreis, während das Einstellen des Lüftspiels über den ersten Regelkreis erfolgt.

Dazu ist ein Schalter vorgesehen, der entweder den einen oder den anderen Regelkreis aktiviert.

Die Art der Regelung ermöglicht es, beim Lösen der Bremse zunächst ein geringes Lüftspiel und erst nach einer gewissen Zeit das volle Lüftspiel einzustellen. Eine erneute Bremsbetätigung unmittelbar nach dem Lösen der Bremse erfolgt dann rasch, da kein Lüftspiel zu überwinden ist.

Im folgenden wird anhand von 3 Figuren die Erfindung näher erläutert.

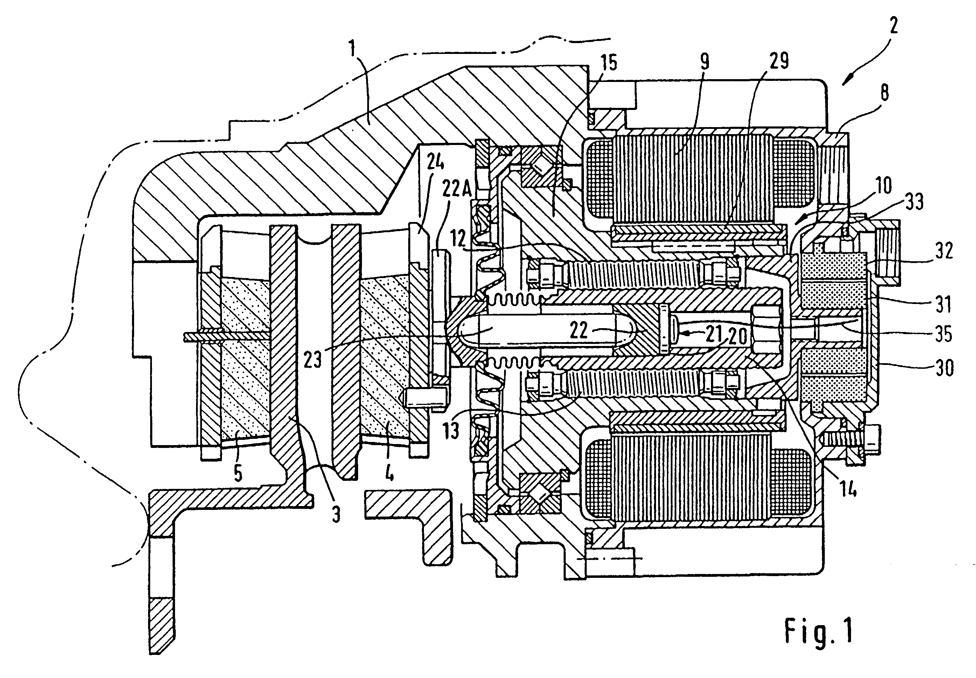

Die Figur 1 zeigt eine elektromechanisch betätigbare Schwimmsattel-Scheibenbremse. Die weiter unten beschriebene Ansteuerung dieser Bremse läßt sich natürlich auch auf alle anderen Arten von Scheiben- sowie auf Trommelbremsen übertragen.

Die Schwimmsattel-Scheibenbremse besteht aus einem gegenüber der Bremsscheibe 3 verschiebbar gelagerten Bremssattel 1, sowie einem Elektromotor 2, dessen Gehäuse 8 am Bremssattel 1 befestigt ist. Zu beiden Seiten der Bremsscheibe befindet sich je ein Reibbelag 4,5. Der erste Reibbelag 4 ist an einer vom Elektromotor 2 angetriebenen Spindel 14 abgestützt, so daß er vom Elektromotor 2 gegen die Bremsscheibe 3 gedrückt werden kann. Der zweite Bremsbelag 5 ist am Bremssattel 1 befestigt, und wird von den Reaktionskräften, die beim Anlegen der ersten Scheibe 4 gegen die Bremsscheibe 3 auf den Sattel 1 übertragen werden, gegen die andere Seite der Bremsscheibe gedrückt.

Der Elektromotor 2 ist ein permanent erregter, elektronisch kommutierbarer Motor, dessen Stator 9 fest im Gehäuse 8 liegt. Der Stator 9 ist dabei in bekannter Weise durch ein Spulensystem realisiert. Der Rotor 10 besteht aus einer Hohlwelle 15, die drehbar im Bremssattel gelagert ist. An der Außenseite der Hohlwelle sind mehrere Permanentmagnetsegmente 29 angeordnet, die fest mit der Hohlwelle 15 verbunden sind. Das vom Stator 9 erzeugte Magnetfeld wirkt mit dem permanenten Magnetfeld der Magnetsegmente 29 zusammen und erzeugt eine Drehung der Hohlwelle 15. Diese Drehung wird mittels eines Rollengewindegetriebes in einer Axialbewegung der Spindel 14 übertragen. Dazu ist an der Innenseite der Hohlwelle 15 sowie an der Außenseite der Spindel 14 jeweils ein Gewinde vorgesehen, die jeweils in das Gewinde von achsparallelen Gewinderollen 12,13 eingreifen.

Die Spindel 14 ist als Hohlzylinder mit einem inneren Absatz 20 ausgeführt. An diesem Absatz 20 stützt sich ein Kraftsensor 21 sowie eine Kalotte 22 ab, an der eine Druckstange 23 anliegt. Dieser wiederum stützt sich mit ihrem anderen Ende an eine weitere Kalotte 22A ab, die verdrehsicher mit dem Belagträger 24 des ersten Reibbelags 4 verbunden ist.

Der Motor 2 ist weiterhin mit einem sogenannten Resolver 30 versehen. Dieser besteht aus zwei koaxial zueinander durch einen Luftspalt voneinander getrennten Ringen 31, 32, wobei der radial innen liegende Ring 31 über ein Halteelement 33 mit der Hohlwelle 15 verbunden ist. Der radial äußere Ring 32 ist mit dem Gehäuse 8 verbunden. Die Signale des Resolvers dienen einerseits dazu, den Motor zu kommutieren, also die Bestromung des Stators 9 so durchführen zu können, daß ein magnetisches Wanderfeld entsteht, und andererseits dazu, die relative Winkellage des Rotors festzustellen. Da die Winkellage des Rotors mit der Axiallage der Spindel direkt verknüpft ist, liefert das Signal des Resolvers auch eine Aussage über die Lage der Spindel 14 im Bremssattel 1.

Die Zuleitung 35 zum Kraftsensor 21 erfolgt durch die hohl ausgeführte Spindel 14, sowie durch einen zentralen Durchbruch im Haltekörper 33 für den Resolver 30.

Eine Betätigung der eben beschriebenen Bremse erfolgt durch eine Strombeaufschlagung des Elektromotors 2.

Dabei muß die Bremse die folgenden Funktionen erfüllen:

    1. Bremsen spannen.

    Dies bedeutet, daß die Reibbeläge 4,5 mit einer bestimmten Kraft, der Zuspannkraft, auf die Bremsscheibe gedrückt werden, so daß die auftretenden Reibkräfte ein Bremsmoment erzeugen, das zu einer Verzögerung des mit der Bremsscheibe 3 verbundenen Fahrzeugrades führt.

    2. Bremse lösen.

    Dies bedeutet, daß die Zuspannkraft gesenkt wird und damit an die vom Fahrer gewünschte Fahrzeugverzögerung angepaßt wird.

    3. Lüftspiel einstellen.

    Dies bedeutet, daß der Elektromotor nach einer Bremsung so angesteuert werden muß, daß die Bremsbeläge 3,4 einen Abstand zur Bremsscheibe einhalten. Dieser Abstand wird als Lüftspiel bezeichnet. Die Einhaltung eines derartigen Lüftspiels soll verhindern, daß die Reibbeläge an der Bremsscheibe reiben, ohne daß eine Bremswirkung beabsichtigt ist.

Um diese Aufgaben zu erfüllen, ist es notwendig, eine Regelung des Motorstroms vorzusehen. Die Regelung kann auf zwei unterschiedlichen Prinzipien basieren, nämlich zum einen eine

- Lageregelung oder eine
- Verzögerungsregelung.

Bei einer Lageregelung wird der Elektromotor 2 derart angesteuert, daß die Spindel 14 um einen bestimmten Betrag verschoben wird.

Bei der Verzögerungsregelung wird ein bestimmtes Verzögerungswunschsignal, das die Bremswirkung charakterisiert, eingestellt.

Bei dem Verzögerungswunschsignal kann es sich handeln um

- die Zuspannkraft,
- das durch die Zuspannkraft erzeugte Bremsmoment oder aber
- die durch das Bremsmoment hervorgerufene (Dreh-) Verzögerung des Fahrzeugrades.

Beide Regler sind in einer Ansteuerelektronik für den Elektromotor 2 integriert und sind parallel zueinander geschaltet, wobei durch eine Auswahlschaltung entweder der Verzögerungsregler oder der Lageregler aktiv ist.

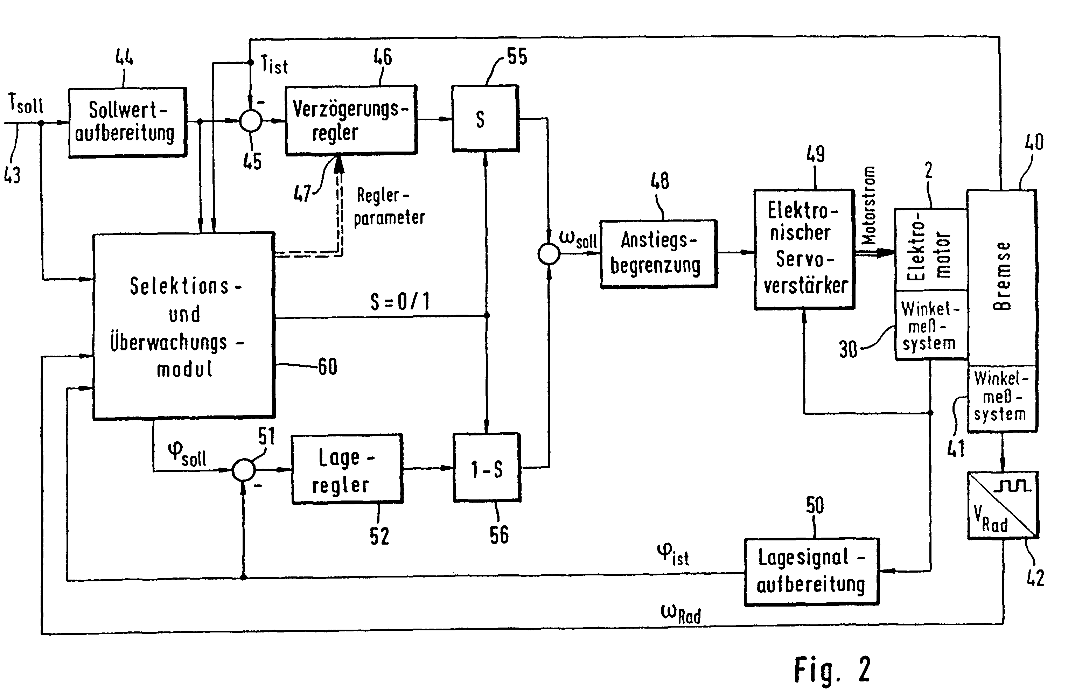

Die Prinzipschaltung dazu ist in der Figur 2 widergegeben. Rechts im Bild ist die Bremse 40 sowie der dazugehörige Elektromotor 2 symbolisch angedeutet. Die Darstellungen repräsentieren eine Ausführung der elektromotorischen Bremse nach Figur 1. Im Elektromotor 2 ist wie schon erläutert, ein Resolver 30 zugeordnet, der Signale über den Lagewinkel des Rotors 10 und damit der Bremsbeläge in Relation zur Bremsscheibe 3 liefert. Dem Rad, dem die Bremse 40 zugeordnet ist, ist ebenfalls ein Winkelmeßsystem 41 zugeordnet, die zeitliche Ableitung der Signale, die vom Winkelmeßsystem 41 geliefert werden, liefern eine Information über die Winkelgeschwindigkeit $\omega_{rad}$ des abzubremsenden Rades. Die Differentiation des Signals des Winkelmeßsystems 41 erfolgt im Differenzierer 42.

Am Eingang 43 der elektronischen Auswerteeinheit liegt ein Sollsignal $T_{soll}$ vor, das von einer übergeordneten Einheit als Verzögerungswunschsignal geliefert wird. Im einfachsten Fall repräsentiert der Wert $T_{soll}$ am Eingang 43 den Wunsch des Fahrers das Fahrzeug in einem bestimmten Maße zu verzögern. Dieser Wert wird einer Sollwertaufbereitung 44 zugeführt, die den Wert $T_{soll}$ so modifiziert, daß unter Berücksichtigung der verfügbaren Dynamik eine möglichst zeitoptimale Ansteuerung der Bremse 40 erreicht und daß im nachfolgenden Regler keine Übersteuerungen induziert werden. Der modulierte Sollwert wird im Vergleicher 45 mit einem Istwert $T_{ist}$ verglichen. Hierbei kann es sich zum Beispiel um einen Wert handeln, der vom Kraftsensor 21 ermittelt wird. Der Wert $T_{ist}$ repräsentiert somit eine Größe, die anzeigt, inwieweit der Fahrerwunsch in der Bremse 40 umgesetzt wird. Die im Vergleicher 45 ermittelte Differenz zwischen dem Soll- und dem Istsignal wird an einen Verzögerungsregler 46 weitergeleitet. Dieser errechnet eine Sollwinkelgeschwindigkeit des Motors und damit eine Sollvorschubgeschwindigkeit für die Spindel 14. (Winkelgeschwindigkeit des Rotors und Vorschubgeschwindigkeit der Spindel sind über die Auslegung des Rollengewindegetriebes fest miteinander verknüpft.) Der Verzögerungsregler arbeitet im einfachsten Fall proportional, das heißt das Ergebnis des Vergleichers 45 wird linear umgerechnet in eine Sollwinkelgeschwindigkeit für den Motor. In diese Berechnung fließt vor allem die Steifigkeit der Bremsanlage als Parameter ein. Unter dem Begriff Steifigkeit ist folgendes zu verstehen. Werden die Zuspannkräfte auf die Bremsscheibe 3 erhöht, hat dies zur Folge, daß sich unter Einfluß der Reaktionskräfte der Bremssattel 1 aufweitet und die Reibbeläge zusammengedrückt werden. Dies hat zur Folge, daß sich der Elektromotor 2 von der Bremsscheibe 3 entfernt, daß sich also die Spindel 14 in Relation zum Motor entsprechend der Aufweitung des Sattels auf die Bremsscheibe zubewegen muß, um den ersten Bremsbelag 4 an der Bremsscheibe 3 zu halten. Die Aufweitung des Bremssattels 1 ist um so größer je höher die Zuspannkraft wird, somit besteht ein Zusammenhang zwischen dem zusätzlichen Verschiebeweg der Spindel 14 und der Zuspannkraft. Die Steifigkeit beschreibt nun das Verhältnis zwischen Aufweitung des Sattels 1 und ausgeübter Zuspannkraft. Die Steifigkeit der Bremsanlage ergibt sich im wesentlichen aus der Steifigkeit des Sattels und der Reibbeläge.

Wenn die Steifigkeit des Sattels groß ist, erreicht man schon mit kleinen Winkeländerungen des Motors eine rasche Anpassung des Istwertes an dem vorgegebenen Sollwert. Dies ist im Verzögerungsregler 46 zu berücksichtigen. Bei den Berechnungen im Verzögerungsregler 46 können noch weitere Parameter berücksichtigt werden, die am Eingang 47 angelegt werden. Diese werden weiter unten näher besprochen.

Die Ausgangsgröße des Verzögerungsreglers 46 die Sollwinkelgeschwindigkeit für den Elektromotor, wird zunächst einer Anstiegsbegrenzungseinheit 48 zugeführt. Diese begrenzt die Änderung der Motorsollwinkelgeschwindigkeit auf einen Maximalwert bzw. einen Minimalwert (bei negativer Motorsollbeschleunigung).

Das ggf. in dieser Weise modifizierte Signal wird an einen Servoverstärker 49 geleitet, der aufgrund dieses Signals die Stärke des Motorstroms ermittelt und eine entsprechende Leistungsendstufe ansteuert.

Der elektronische Servoverstärker beinhaltet eine Motordrehzahlregelung mit unterlagerter Motorstromregelung. Dazu wird dem Servoverstärker 49 das Signal des Resolvers 30 zugeführt.

Die Lageregelung arbeitet wie folgt. Die Signale des Resolvers 30 werden einer Lagesignalaufbereitung 50 zugeführt, die einen Wert $\varphi_{ist}$ ausgibt, der den Lagewinkel des Elektromotors angibt. Dieser Wert wird in einem Vergleicher 51 mit einem Sollwinkel $\varphi_{soll}$ verglichen, und die Differenz einem Lageregler 52 zugeführt. Dieser ermittelt aus der Differenz eine Sollwinkelgeschwindigkeit für den Elektromotor, der ebenfalls über den Anstiegsbegrenzer 48 dem Servoverstärker 49 zugeführt wird.

In beiden Regelkreisen ist je ein Schalter 55, 56 vorgesehen. Dabei ist die Ansteuerung der Schalter 55, 56 so, daß nur das Signal eines Reglers 46 bzw. 52 zur Anstiegsbegrenzung 48 bzw. zum Servoverstärker 49 durchgeleitet wird. Das heißt die Anlage arbeitet entweder mit dem Verzögerungsregler 46 oder aber mit dem Lageregler 52. Die Entscheidung darüber erfolgt mit Hilfe des Selektions- und Überwachungsmoduls 60, das die folgenden Aufgaben übernimmt:

a) Auswahl des aktiven Reglers. Für S = 1 ist der Verzögerungsregler, für S = 0 ist der Lageegler aktiv.

b) Berechnung und Vorgabe des Sollwertes für den Motorlagewinkel $\varphi_{soll}$ wenn der Lageregler aktiv ist (S = O).

c) Aktualisierung der Verzögerungsreglerparameter, z. B. in Abhängigkeit der Steifigkeit

d) Aktualisierung der Spannkraft-Weg-Kennlinie bzw. Bremsmoment-Weg-Kennlinie auf der Basis der Regelkreissignale (im wesentlichen Kraft bzw. Moment und Position).

Die Selektion ist so gestaltet, daß grundsätzlich die Verzögerungsregelung gegenüber der Lageregelung die höhere Priorität besitzt. Im unbetätigten Zustand weist die Bremse ein Lüftspiel auf. Wird ein Verzögerungssollwert $T_{soll} > 0$ bzw. $T_{soll} > \varepsilon$ (mit $\varepsilon$ klein) vorgegeben, so wird sofort der Verzögerungsregler durch S = 1 aktiviert. Damit wird zunächst das Lüftspiel überwunden und anschließend der geforderte Sollwert eingeregelt. Das Lösen der Bremse wird durch einen Verzögerungssollwert von $T_{soll} \leq 0$, bzw. $\varepsilon$ signalisiert. In diesem Fall wird durch Setzen von S = 0 der Lageregler aktiv und zunächst ein vermindertes Lüftspiel lagegeregelt angefahren:

$$\varphi_{soll} = \varphi_o - \varphi_{LS,Verm.}$$

Dabei repräsentiert $\varphi_o$ die Position, in der die Beläge kraftfrei an der Bremsscheibe anliegen. Dieses verminderte Lüftspiel stellt eine "Bereitschaftsstellung" dar und führt zu einer Verkürzung der Reaktionszeit bei einer erneuten Bremsenbetätigung kurz nach dem vorherigen Lösen der Bremse, d.h. die Bremse kann dann schneller wieder gespannt werden (Diese Form der Erhöhung der Betriebsbereitschaft ist bei derzeit üblichen hydraulischen Hilfskraftbremsanlagen nicht möglich). Wird nach Ablauf einer definierten Wartezeit $t_1$, kein weiteres Verzögerungswunschsignal $T_{soll} > 0$ vorgegeben, so wird das vollständige Lüftspiel lagegeregelt angefahren:

$$\varphi_{soll} = \varphi_o - \varphi_{LS,Verm.}$$

Nach Ablauf einer weiteren Wartezeit $t_2$ ohne daß die Vorgabe eines Sollwertes $T_{soll} > 0$ bzw. $\varepsilon$ (Aufforderung zum Spannen der Bremse) erfolgt ist, ist die Regelung beendet und die Reglerelektronik kann deaktiviert werden. Eine erneute Aktivierung erfolgt dann wieder durch $T_{soll} > 0$ bzw. $\varepsilon$.

Wie erwähnt kann der Verzögerungsregler auf unterschiedlicher Basis arbeiten, jenachdem welcher Wert abgeglichen werden soll. Eine Möglichkeit besteht, wie schon erläutert darin, die Zuspannkraft zu messen und als Sollwert eine entsprechende Vorgabe für die Zuspannkraft anzugeben.

Eine weitere Möglichkeit besteht darin, das Bremsmoment zu regeln. Das Bremsmoment $M_B$ ist für eine Scheibenbremse über die folgende Formel mit der Zuspannkraft $F_{sp}$ verknüpft.

$$M_B = 2 \cdot \mu_{BS} \cdot r_B \cdot F_{sp}$$

mit $\mu_{BS}$ = Reibwert, $r_B$ = wirksamer Reibradius.

Für Trommelbremsen gilt eine entsprechende Formel.

Das Istbremsmoment wird entweder direkt an der Nabe des Rades bzw. der Bremsscheibe gemessen oder aber aus zur Verfügung stehenden Daten ermittelt. Bei einer Regelung über das Bremsmoment besteht das Problem, daß nicht immer ein Signal zur Verfügung steht, das das Bremsmoment beschreibt. Bei stehendem Rad (Fahrzeugstillstand oder blockiertes Rad) kann in der Ebene kein einer Zuspannkraft sinnvoll zugeordnetes Bremsmomentensignal erfaßt werden. Um mechanische Störungen der Bremsbetätigung zu vermeiden, muß in Abhängigkeit von der Raddrehzahl und der Signalabtastzeit des Raddrehzahlgebers beim Unterschreiten einer bestimmten Geschwindigkeitsschwelle eine Umschaltung von der Bremsmomentenregelung zur Bremsmomentensteuerung vorgenommen werden.

Aus diesem Grund wird die Winkelgeschwindigkeit des Rades, die am Differenzierer 42 abgegeben wird, der Selektions- und Überwachungsmodul 60 zugeführt. Wird ein Minimalwert $\omega_{Rad,Min}$ unterschritten so wird durch Setzen des Schaltsignals S = 0 der Lageregler aktiviert. Der Sollwert für den Lageregler $\varphi_{soll}$ ergibt sich dabei aus dem aufbereiteten Bremsmomenten-Sollwert unter Berücksichtigung einer aktualisierten Bremsmomenten-Weg-Kennlinie, die im Selektions- und Überwachungsmodul 60 abgelegt ist. Das heißt, daß aus der bekannten bzw. aktualisierten Bremsmomenten-Weg-Kennlinie der zum gewünschten Bremsmoment zugehörige Verschiebeweg der Spindel ermittelt und in einen entsprechenden Drehwinkel des Elektromotors 2 umgesetzt wird.

Eine dritte Möglichkeit besteht darin, den Verzögerungsregler 46 auf der Basis der zeitlichen Veränderung der Radwinkelgeschwindigkeit arbeiten zu lassen. Dieses Signal erhält man, wenn man den Ausgang des Differenzierers 42 einem weiteren Differenzierer 43 zuführt und als Sollsignal eine Raddrehverzögerung vorgibt.

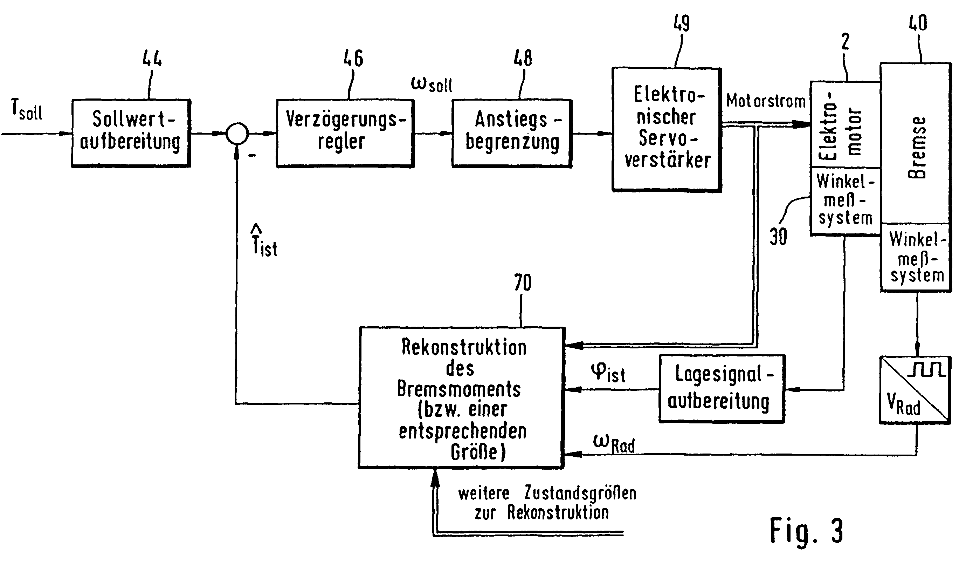

Das Bremsmoment oder aber einer dem Bremsmoment ähnlichen Größe, kann aber auch aufgrund einer Rekonstruktion 70 ermittelt werden, wie dies in der Figur 3 dargestellt ist. Figur 3 zeigt die Regelkreisstruktur aus Figur 2 für den Fall S = 1, (Verzögerungsregelung ist aktiviert). In die Rekonstruktion eines derartigen Signals fließt der Motorstrom, die Werte des Resolvers 30 am Elektromotor 2, die Werte eines Raddrehzahlsensors sowie weitere zur Rekonstruktion geeignete und im Fahrzeug ggf. bereits standardmäßig vorhandene Prozeßmeßsignale ein.

**Patentansprüche**

1. Steuer- bzw. Regelsystem für eine elektromotorisch betätigte Radbremse (40) für ein Kraftfahrzeug mit Mitteln (30), die die Lage eines Betätigungselements relativ zum Elektromotor (2) bestimmen, mit Mitteln (21) zur Bestimmung einer die Bremswirkung charakterisierenden Größe, **dadurch gekennzeichnet, daß** ein zwischen einem ersten und einem zweiten Regelmodus umschaltbarer Regler (46,52) vorgesehen ist, wobei im ersten Regelmodus die Istlage des Betätigungselements einem Sollwert nachgeführt wird und im zweiten Regelmodus ein die Bremswirkung repräsentierendes Istsignal einem Wunschsignal nachgeführt wird,und daß eine Entscheidungsschaltung (60) in Abhängigkeit von einem Entscheidungskriterium den ersten oder den zweiten Regelmodus aktiviert.

2. Steuer- bzw. Regelsystem nach Anspruch 1, **dadurch gekennzeichnet, daß** der zweite Regelmodus aktiviert wird, wenn die Bremse (40) betätigt, also eine Bremswirkung erzielt werden soll.

3. Steuer- bzw. Regelsystem nach Anspruch 1, **dadurch gekennzeichnet, daß** der erste Regelmodus aktiviert wird, um ein Lüftspiel zwischen einer mit dem sich drehenden Rad verbundenen Reibfläche und einem vom Elektromotor (2) verschiebbaren Reibelement einzustellen.

4. System nach Anspruch 3, **dadurch gekennzeichnet, daß** das Lüftspiel für eine kurze Zeit nach Lösen der Bremse (40) auf einen kleinen Wert nahe 0 eingestellt wird, und erst nach Ablauf dieser Zeit auf einen Normalwert eingestellt wird.

5. System nach Anspruch 1, **dadurch gekennzeichnet, daß** als die Bremswirkung charakterisierende Größe die Zuspannkraft gewählt wird.

6. System nach Anspruch 1, **dadurch gekennzeichnet, daß** als die Bremswirkung charaktisierende Größe das durch die Zuspannkraft erzeugte Bremsmoment gewählt wird.

7. System nach Anspruch 6, **dadurch gekennzeichnet, daß** die Raddrehgeschwindigkeit erfaßt wird, und daß die Regelung oberhalb einer Mindestgeschwindigkeit im zweiten Regelmodus und unterhalb dieser Mindestgeschwindigkeit im ersten Regelmodus durchgeführt wird.

8. Regelsystem nach Anspruch 1, **dadurch gekennzeichnet, daß** als die Bremswirkung charakterisierende Größe die Radverzögerung gewählt wird.

9. Elektromotor mit einem Regelsystem nach Anspruch 5, **dadurch gekennzeichnet, daß** eine vom Elektromotor (2) angetriebene Spindel (14) als Hohlspindel mit einer Stufenbohrung versehen ist, wobei am Absatz (20) der Stufe ein Kraftsensor (21) abgestützt ist.

**Claims**

**1.** Control or regulation system for an automotive vehicle wheel brake (40) operated by an electric motor, which includes a means (30) determining the position of an actuating element in relation to the electric motor (2), a means (21) to determine a quantity that characterizes the braking effect, **characterized in that** a controller (46, 52) which is adapted to switch over between a first and a second control mode is provided, with the actual position of the actuating element being adapted to a nominal value in the first control mode, while in the second control mode an actual signal representative of a deceleration follows a desired deceleration signal, and **in that** a decision circuit (60) activates either the first or the second control mode in response to a decision criterion.

**2.** Control or regulation system as claimed in claim 1, **characterized in that** the second control mode is activated when the brake (40) shall be operated, i. e., with the aim of achieving a braking effect.

**3.** Control or regulation system as claimed in claim 1, **characterized in that** the first control mode is activated in order to adjust a clearance between a friction surface coupled to a rotating wheel and a friction element which is displaceable by the electric motor (2).

**4.** System as claimed in claim 3, **characterized in that** the clearance is adjusted to a small value proximate 0 for a brief interval after release of the brake (40) and will be readjusted to a normal value only after lapse of this interval.

**5.** System as claimed in claim 1, **characterized in that** the application force is chosen as the quantity which characterizes the braking effect.

**6.** System as claimed in claim 1, **characterized in that** the brake torque produced by the application force is used as the quantity which characterizes the braking effect.

**7.** System as claimed in claim 6, **characterized in that** the wheel rotational speed is determined, and **in that** the control is performed in the second control mode above a minimum speed and in the first control mode below said minimum speed.

**8.** Regulation system as claimed in claim 1, **characterized in that** the wheel deceleration is chosen as the quantity which characterizes the braking effect.

**9.** Electric motor including a regulation system as claimed in claim 5, **characterized in that** a spindle (14) driven by the electric motor (2) is configured as a hollow spindle including a stepped bore, and a force sensor (21) is supported on the step (20).

**Revendications**

**1.** Système de commande ou de régulation pour un frein de roue (40) à actionnement par moteur électrique, pour véhicule automobile, comprenant des moyens (30) qui déterminent la position d'un élément d'actionnement vis-à-vis du moteur électrique (2) et des moyens (21) servant à déterminer une grandeur caractérisant l'action de freinage, **caractérisé en ce qu'**il est prévu un régulateur (46, 52) qui peut être commuté entre un premier et un second modes de régulation, la position réelle de l'élément d'actionnement faisant l'objet d'un réglage de suivi vis-à-vis d'une valeur de consigne dans le premier mode de régulation et un signal réel représentant l'action de freinage faisant l'objet d'un suivi vis-à-vis d'un signal de souhait dans le second mode de régulation, et **en ce qu'**un circuit de décision (60) active le premier ou le second mode de régulation en fonction d'un critère de décision.

**2.** Système de commande ou de régulation suivant la revendication 1, **caractérisé en ce que** le second mode de régulation est activé lorsque le frein (40) doit être actionné, donc qu'une action de freinage doit être obtenue.

**3.** Système de commande ou de régulation suivant la revendication 1, **caractérisé en ce que** le premier mode de régulation est activé dans le but de régler un entrefer entre une surface de frottement reliée à la roue qui tourne et un élément de friction pouvant être déplacé par le moteur électrique (2).

**4.** Système de commande ou de régulation suivant la revendication 3, **caractérisé en ce que** l'entrefer est réglé à une petite valeur voisine de 0 pour une brève durée après un relâchement du frein (40) et n'est réglé à une valeur normale qu'une fois cette durée écoulée.

**5.** Système de commande ou de régulation suivant la revendication 1, **caractérisé en ce que** la force de serrage est choisie en tant que grandeur caractérisant l'action de freinage.

**6.** Système de commande ou de régulation suivant la revendication 1, **caractérisé en ce que** le couple de freinage produit par la force de serrage est choisi en tant que grandeur caractérisant l'action de freinage.

**7.** Système de commande ou de régulation suivant la revendication 6, **caractérisé en ce que** la vitesse de rotation de roue est détectée et **en ce que** la régulation est effectuée dans le second mode de régulation au-dessus d'une vitesse minimale et dans le premier mode de régulation au-dessous de cette valeur minimale.

**8.** Système de commande ou de régulation suivant la revendication 1, **caractérisé en ce que** la décélération de roue est choisie en tant que grandeur caractérisant l'action de freinage.

**9.** Moteur électrique comportant un système de régulation suivant la revendication 5, **caractérisé en ce qu'**un axe (14) entraîné par le moteur électrique (2), servant d'axe creux, est pourvu d'un alésage étagé, un capteur de force (21) étant en appui sur l'épaulement (20) de la forme étagée.

Fig.1

$T_{soll}$

44
Sollwertaufbereitung

43

$T_{ist}$

46
45 − Verzögerungsregler

47 Reglerparameter

55
S

Selektions-
und
Überwachungsmodul

60

S = 0/1

$\varphi_{soll}$

51

Lageregler

52

1 − S

56

48
$\omega_{soll}$ Anstiegsbegrenzung

49
Elektro-
nischer
Servoverstärker

Motorstrom

2
Elektromotor

30 Winkel-
meß-
system

40
Bremse

Winkel-
meß-
system

41

42
$V_{Rad}$

50
Lagesignalaufbereitung

$\varphi_{ist}$

$\omega_{Rad}$

Fig. 2

$T_{soll}$ → | Sollwert-aufbereitung | **44**

| Verzögerungs-regler | **46**

$\omega_{soll}$

| Anstiegs-begrenzung | **48**

| Elektro-nischer Servo-verstärker | **49**

Motorstrom

| Elektro-motor | **2**

| Winkel-meß-system |

**30**

| Bremse | **40**

Winkel-meß-system

$\hat{T}_{ist}$

| Rekonstruktion des Bremsmoments (bzw. einer entsprechenden Größe) | **70**

$\varphi_{ist}$

| Lagesignal-aufbereitung |

$\omega_{Rad}$

| $V_{Rad}$ |

weitere Zustandsgrößen zur Rekonstruktion

Fig. 3

10